# EUROPÄISCHE PATENTSCHRIFT

(11) **EP 0 655 315 B1**
(45) Veröffentlichungstag und Bekanntmachung des Hinweises auf die Patenterteilung: **17.03.1999**
(21) Anmeldenummer: 94118278.4
(22) Anmeldetag: 21.11.1994
(51) Int. Cl.: B29C 51/46

(54) **Verfahren zum Steuern des Formdruckes zum Druckluftformen eines Artikels aus thermoplastischer Kunststoffolie und Vorrichtung zur Durchführung des Verfahrens**
Method of controlling the mould pressure for air-pressure moulding of an article made out of a thermoplastic sheet and apparatus for carrying out that process
Procédé de commande de pression pour moulage par pression d'air d'un article à partir d'une feuille de matière plastique et dispositif pour sa mise en oeuvre

(30) Priorität: 27.11.1993 DE 4340449
(43) Veröffentlichungstag der Anmeldung: 31.05.1995
(73) Patentinhaber: Adolf Illig Maschinenbau GmbH & Co, D-74081 Heilbronn (DE)
(72) Erfinder: Zundel, Werner, D-74348 Lauffen (DE)

(56) Entgegenhaltungen:
- DE-A- 1 454 962

## Beschreibung

Die Erfindung betrifft ein Verfahren zum Steuern des Formdruckes zum Druckluftformen eines Artikels aus thermoplastischem Kunststoff nach dem Oberbegriff des Hauptanspruches und eine Vorrichtung zur Durchführung des Verfahrens.

Je nach der Gestalt des herzustellenden Artikels, der Folienart, Foliendicke und Folientemperatur sind unterschiedliche Formdrücke erforderlich bzw. verfahrenstechnisch vorteilhaft. Man wählt den Formdruck nicht höher als nötig, da Druckluft Geld kostet und Druckaufbau und Druckabbau Zeit erfordern und sich damit auf die Taktzeit negativ auswirken.

Der Formdruck zum Druckluftformen wird in bekannter Weise an einem Druckregelventil eingestellt. Solche Druckregelventile haben einen relativ großen Widerstand, so daß mit Strömungsverlusten gerechnet werden muß. Von der Charakteristik her verengt sich ihr Querschnitt mit steigendem Sekundärdruck immer mehr, so daß der Widerstand größer und die Luftmenge immer kleiner wird. Bis sich vom Öffnen eines Ventils in der Formluftzuleitung ein eingestellter Formdruck von ca. 5 bar ergeben hat, vergeht in der Praxis eine Zeitspanne in der Größenordnung von 0,5 Sekunden.

Aus der DE-AS 14 54 962 ist es bekannt, statt eines Druckregelventiles einen Druckschalter in die Formluftzuleitung einzubauen, der bei Erreichen des vorgegebenen Formdruckes die Formluftzufuhr durch Schließen eines Ventils unterbindet. Die Nachteile des Druckregelventiles sind damit zwar vermieden, doch haben Versuche gezeigt, daß auf diese Weise keine reproduzierbaren und genauen Werte für den Formdruck erreicht werden können. Dies liegt zum einen an der Trägheit des Systems. Wenn der Druckschalter den vorgegebenen Wert meldet, wird dieses Signal in der Steuerung dazu verwendet, ein Magnetventil zum Schließen zu veranlassen. Ein solches Magnetventil hat aber bauartbedingt immer eine Verzögerungszeit, bis es ganz geschlossen ist. In dieser Zeit strömt weiter Luft ein, d. h. der Formdruck steigt immer über den am Druckschalter eingestellten Wert hinaus. Je nach Netzdruck - dieser schwankt in der Regel in der Größenordnung von 1 bar - ist dieser den vorgegebenen Druck übersteigenden Wert nicht konstant und wird noch von unterschiedlichen Verzögerungszeiten des Magnetventils, die ebenfalls netzdruckabhängig sein können, beeinflußt. Ungleiche Formdrücke haben aber eine unterschiedliche Qualität der geformten Artikel zur Folge, was nicht akzeptiert wird.

Der Erfindung liegt die Aufgabe zugrunde, das Verfahren der Formluftzufuhr so zu verbessern, daß der vorgegebene Formdruck sehr rasch reproduzierbar erreicht wird, ohne den vorgegebenen Wert zu übersteigen, wodurch sich eine deutliche Verkürzung der Taktzeit ergeben sollte. Dieser Formdruck sollte in der Steuerung abgespeichert werden können, so daß bei Aufruf eines Formungsprogrammes für einen bestimmten Artikel auch der Wert für den Formdruck automatisch vorgegeben wird.

Die Vorrichtung zur Durchführung des Verfahrens sollte so ausgebildet sein, daß das erfindungsgemäße Verfahren durchgeführt werden kann und zwar bei Bedarf an beiden Hälften des Formwerkzeuges. Vorzugsweise auch dann, wenn Vakuum zur Unterstützung des Formungsprozesses eingesetzt wird und ein Entformen der geformten Artikel über Entformluft erfolgt.

Gelöst ist diese Aufgabe erfindungsgemäß durch die im Kennzeichen des Hauptanspruches angegebenen Maßnahmen bezüglich des Verfahrens sowie durch die Merkmale des Anspruches 3 bezüglich der Vorrichtung zur Durchführung des Verfahrens.

Die anderen Ansprüche stellen vorteilhafte Weiterbildungen der Erfindung dar.

Ein Ausführungsbeispiel der Erfindung ist anhand der schematischen Zeichnungen näher beschrieben. Es zeigt:

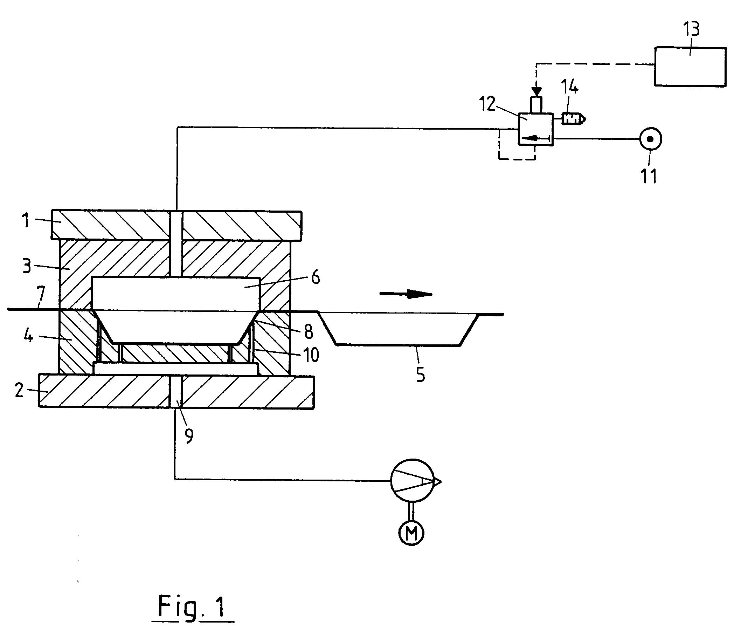

- Figur 1 -: einen Querschnitt durch ein Formwerkzeug
- Figur 2 -: einen Querschnitt durch das Formwerkzeug, wobei eine Umschaltung zwischen Oberteil und Unterteil erfolgen kann, und wobei der Formprozess durch Vakuum unterstützt wird.

Das erfindungsgemäße Verfahren findet Anwendung bei einer Vorrichtung zum Tiefziehen eines Abschnittes einer erwärmten Folienbahn 7. Sie weist zwei zueinander verschiebbare Formtische 1, 2 auf, von denen jeder eine Formhälfte 3, 4 trägt. Eine Formhälfte 4 weist dabei die Form des herzustellenden Artikels auf, die andere Formhälfte 3 wirkt als Druckglocke. Letztere weist einen Raum 6 auf, in den Druckluft zugeführt wird und in dem sich der Formdruck aufbaut, der dazu dient, die Folienbahn 7 gegen die Formwand 8 zu drücken. Das Formen kann durch Vakuum unterstützt werden, das über den Anschluß 9 und Bohrungen 10 bis zur Formwand 8 geführt wird.

Der Formdruck wird aus dem im Druckluftnetz 11 herrschenden Netzdruck gebildet, in dem die Druckluft einem an sich bekannten Proportionalventil 12 eingangsseitig zugeführt wird. Ausgangsseitig steht das Proportionalventil 12 mit dem Formtisch 1 und über Bohrungen mit dem Formraum 6 in Verbindung. Von der Steuerung 13 aus erfolgt die Ansteuerung des Proportionalventiles 12 entsprechend des vorgegebenen Formdruckes mit einem entsprechenden Steuersignal. Wird das Proportionalventil 12 mit diesem Signal angesteuert, öffnet es die Zuleitung zum Formraum 6 völlig, so daß rasch Druckluft vom Netz 11 einströmt. Nähert sich der Formdruck dem vorgegebenen Wert, schließt das Proportionalventil 12 entsprechend so rechtzeitig, daß kein Überschwingen des Formdruckes über den vorgegebenen Wert hinaus erfolgt, aber doch so kurzfristig, daß der vorgegebene Formdruck in kürzest möglicher Zeit erreicht wird. Nach dem Formvorgang entläßt das Proportionalventil 12 die Formluft über einen Ausgang 14 ins Freie. Indem das Proportionalventil mit diesem Ausgang versehen ist, sind zusätzliche Entlüftungsventile nicht erforderlich.

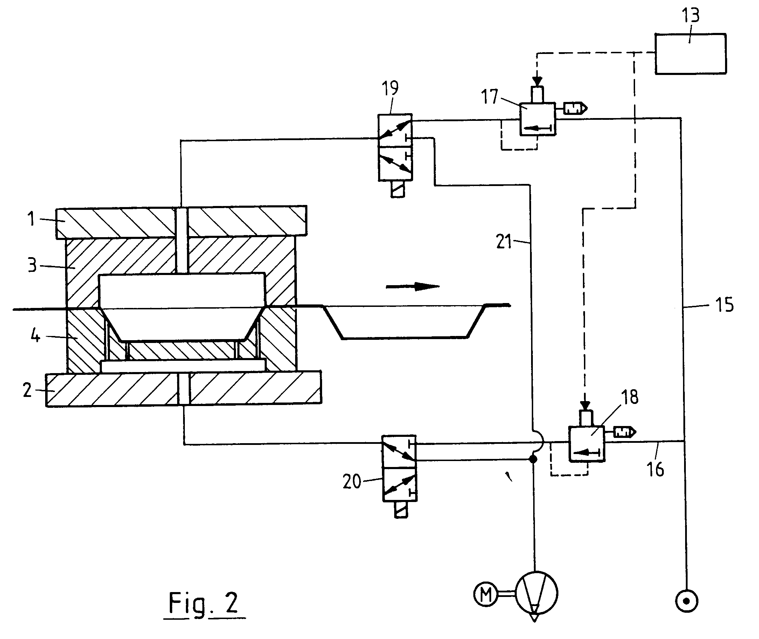

Eine Vorrichtung zur Durchführung des Verfahrens ist in der Regel so aufgebaut, daß die beiden Formhälften 3, 4 wahlweise am oberen oder unteren Formtisch 1, 2 angebaut sein können. Man wählt die Anordnung entsprechend der gewünschten Lage des geformten Artikels 5. Dies ist wichtig im Hinblick auf Ausstanzen bzw. Stapeln der Artikel 5. Um Umbauten der Verrohrung beim Werkzeugwechsel zu vermeiden, wird in Weiterbildung der Erfindung vorgeschlagen, beide Formtische 1, 2 mit einem Proportionalventil 17, 18 zu verbinden (siehe Figur 2). Das Umstellen der Maschine erfolgt dann allein durch Vorgabe in der Steuerung.

Da dann abwechselnd Vakuum und Formluft an den Formtischen 1, 2 zur Verfügung stehen muß, und nach dem Formen der Artikel 5 zum Lösen der Artikel 5 von der Formwand 8 ein geringer Luftstoß zugeführt werden sollte, wird gemäß Figur 2 folgender Aufbau vorgeschlagen:

Vom Netz 11 führt je eine Leitung 15, 16 zu den beiden Formtischen 1, 2. In der Leitung 15, 16 ist jeweils ein Proportionalventil 17, 18, dahinter ein Magnetventil 19, 20 angeordnet. Diese Magnetventile 19, 20 haben außer dem Anschluß für die Druckluft auch einen zweiten eingangsseitigen Anschluß für eine Vakuumleitung 21. Sie sind umschaltbar zwischen einer ersten Stellung - Druckluft mit den Formtischen 1, 2 verbunden - und einer zweiten Stellung - Vakuum mit den Formtischen 1, 2 verbunden. Im dargestellten Beispiel arbeiten die beiden Proportionalventile 19, 20 wie folgt:

Während des Formprozesses strömt Formluft durch das Proportionalventil 17 und das Magnetventil 19 zur Formhälfte 3. Das Ventil 19 bleibt immer in dieser Stellung. Gleichzeitig steht das Proportionalventil 20 in der Stellung, daß Vakuum am Formteil 4 anliegt. Nach dem Formen entlüftet das Proportionalventil 17 den Formraum 8 ins Freie. Das Ventil 20 schaltet um von Vakuum auf Druckluft und das Proportionalventil 18 öffnet zur Zuführung der Entformluft bis zum Erreichen des vorgegebenen Entformluftdruckes.

Die Proportionalventile 17, 18 haben also zweierlei Funktionen - je nachdem, welcher Formteilhälfte 3, 4 sie zugeordnet sind: Zufuhr der Formluft oder Zufuhr der Entformluft. Beides kann in der erforderlichen Weise mit einem vorgegebenen Druck erfolgen.

## Patentansprüche

1. Verfahren zum Steuern des Formdruckes zum Druckluftformen eines Artikels aus einer erwärmten thermoplastischen Folienbahn (7), die dabei in eine Form (3, 4) tiefgezogen wird, dadurch gekennzeichnet, daß ein dem in der Steuerung vorgegebenen Formdruck entsprechendes Signal auf ein in der Zuleitung der Formluft angeordnetes Proportionalventil (12, 17) einwirkt, so daß dieses die Formluft zunächst im vollen Querschnitt freigibt, diesen bei Annäherung an den vorgegebenen Formdruck drosselt und bei Erreichen des Formdruckes absperrt.

2. Verfahren nach Anspruch 1 dadurch gekennzeichnet, daß das Zuführen der Entformluft zur Formhälfte (4) mit der Form des herzustellenden Artikels (5) ebenfalls über ein Proportionalventil (18) erfolgt, dem ein Steuersignal von der Steuerung entsprechend des vorgegebenen Entformdruckes zugeführt wird.

3. Vorrichtung zur Durchführung des Verfahrens nach Anspruch 1 mit einer Formstation mit zwei relativ zueinander verschiebbaren Formtischen (1, 2) zur Aufnahme der Formhälften (3, 4), einer Transporteinrichtung zum intermittierenden Transport einer Folienbahn (7) und Leitungen (15, 16) zur Zufuhr von Druckluft zu den Formhälften (3, 4), dadurch gekennzeichnet, daß in die Leitung (15) der Formluft ein Proportionalventil (12, 17) eingebaut ist, auf das ein dem in der Steuerung vorgegebenen Formdruck entsprechendes Steuersignal einwirkt.

4. Vorrichtung nach Anspruch 3 dadurch gekennzeichnet, daß in der Leitung (16) der Entformluft ein Proportionalventil (18) angeordnet ist, auf das ein dem in der Steuerung vorgegebenen Entformdruck entsprechendes Steuersignal einwirkt.

5. Vorrichtung nach Anspruch 4 dadurch gekennzeichnet, daß in die Leitungen (15, 16) für Formluft und Entformluft ein Ventil (19, 20) eingebaut ist, das eingangsseitig einen Anschluß für Vakuum aufweist.

6. Vorrichtung nach einem der Ansprüche 3 bis 5 dadurch gekennzeichnet, daß die Proportionalventile (12, 17, 18) einen Auslaß (14) für die Formluft aufweisen.

## Claims

1. Method of controlling the mould pressure for compressed air moulding of an article from a heated thermoplastic foil strip (2), which in that case is deep drawn in mould (3, 4), characterised in that a signal corresponding to the mould pressure preset in the control acts on a proportional valve (12, 17), which is arranged in the feed of the mould air, so that this initially frees the mould air in full cross-section, throttles this on approach to the preset mould pressure and blocks this on reaching of the mould pressure.

2. Method according to claim 1, characterised in that the feed of the mould release air to the mould halves (4) with the mould of the article to be produced (5) similarly takes place by way of a proportional valve (18), to which a control signal of the control corresponding to the preset mould release pressure is fed.

3. Device for carrying out the method according to claim 1 with a mould station with two mould tables (1, 2), which are displaceable relative to one another, for reception of the mould halves (3, 4), a transport device for intermittent transport of a foil strip (7) and ducts (15, 16) for the feed of compressed air to the mould halves (3, 4), characterised in that a proportional valve (12, 17), on which a control signal corresponding to the mould pressure preset in the control acts, is incorporated in the duct (15) of the mould air.

4. Device according to claim 3, characterised in that a proportional valve (18), on which a control signal corresponding to the mould pressure preset in the control acts, is arranged in the duct (16) of the mould release air.

5. Device according to claim 4, characterised in that a valve (19, 20), which has a connection for vacuum at the inlet side, is incorporated in the ducts (15, 16) for mould air and mould release air.

6. Device according to one of claims 3 to 5, characterised in that the proportional valves (12, 17, 18) have an outlet (14) for the mould air.

## Revendications

1. Procédé de commande de la pression utilisée pour mouler à l'air comprimé, un article à partir d'une bande pelliculaire (7) thermoplastique chauffée, que l'on emboutit dans un moule (3, 4),
caractérisé en ce qu'
un signal correspondant à la pression de moulage prévue dans la commande agit sur une soupape proportionnelle (12, 17) montée dans la conduite d'amenée de l'air de moulage de manière à libérer d'abord toute la section de passage de l'air, puis à l'étrangler lorsque la pression de l'air approche de la pression de moulage prévue et enfin l'obturer quand cette pression est atteinte.

2. Procédé selon la revendication 1,
caractérisé en ce que
l'amenée de l'air de démoulage à la moitié de moule (4) ayant la forme de l'article à fabriquer (5) s'effectue également par l'intermédiaire d'une soupape proportionnelle (18) à laquelle est adressé, par la commande, un signal correspondant à la pression prédéterminée de démoulage.

3. Dispositif pour la mise en oeuvre du procédé de la revendication 1, comportant une station de moulage à deux tables de moulage (1, 2) pouvant coulisser l'une par rapport à l'autre pour recevoir les moitiés de moule (3, 4), un dispositif de transport pour faire avancer avec intermittence une bande pelliculaire (7) ainsi que des conduites (15, 16) pour amener de l'air comprimé aux moitiés de moule (3, 4),
caractérisé en ce que
dans la conduite (15) d'air de moulage est montée une soupape proportionnelle (12, 17) sur laquelle agit un signal de commande correspondant à la pression de moulage prédéterminée dans la commande.

4. Dispositif selon la revendication 3,
caractérisé en ce que
dans la conduite (16) de l'air de démoulage est montée une soupape proportionnelle (18) sur laquelle agit un signal de commande correspondant à la pression de démoulage prédéterminée dans la commande.

5. Dispositif selon la revendication 4,
caractérisé en ce que
dans les conduites (15, 16) de l'air de moulage et de l'air de démoulage sont montées respectivement une soupape (19, 20) qui dispose, du côté de son entrée, d'un raccordement au vide.

6. Dispositif selon une des revendications 3 à 5,
caractérisé en ce que
les soupapes proportionnelles (12, 17, 18) comportent chacune une sortie (14) pour l'air de moulage.
